# FASCICULE DE BREVET EUROPEEN

(11) **EP 0 814 975 B1**
(45) Date de publication et mention de la délivrance du brevet: **05.12.2001**
(21) Numéro de dépôt: 97901136.8
(22) Date de dépôt: 22.01.1997
(51) Int. Cl.: B60R 13/04, B60J 10/08

(54) **ELEMENT D'ASSEMBLAGE A JOINT D'ETANCHEITE EXTRUDE**
VERBINDUNGSEINHEIT MIT EXTRUDIERTER DICHTUNG
CONNECTING ELEMENT WITH AN EXTRUDED SEAL

(30) Priorité: 23.01.1996 DE 19602245
(43) Date de publication de la demande: 07.01.1998
(73) Titulaire: SAINT-GOBAIN GLASS FRANCE, 92400 Courbevoie (FR)
(72) Inventeur: CORNILS, Gerd, D-52399 Merzenich 2 (DE); KÖTTE, Rolf, D-52477 Alsdorf-Begau (DE); ZIESEN, Stefan, D-52525 Heinsberg (DE)
(74) Mandataire: Muller, René
(86) Numéro de dépôt international: FR9700118
(87) Numéro de publication internationale: WO9727081

(56) Documents cités:
- GB-A- 1 070 547
- US-A- 2 620 524
- US-A- 2 671 935
- US-A- 2 679 667
- US-A- 2 968 072
- US-A- 5 261 721

## Description

La présente invention concerne un objet équipé d'un cordon élastomère par extrusion in situ et plus particulièrement un élément d'assemblage qui possède un rebord de fixation sur lequel est fixé le cordon élastomère destiné notamment à constituer une étanchéité entre l'objet qu'il équipe et un autre objet par rapport auquel il peut bouger.

Le document EP-A-0 524 092 décrit une technique pour équiper un objet d'un cordon profilé extrudé in situ. Le cordon est en élastomère et peut équiper des objets divers, vitrage automobile et diverses pièces d'automobile, telles que portières, capots ou carter, porte ou fenêtre ou vitrage destinés au bâtiment ainsi que porte ou éléments d'appareil ménager.

Dans ce document, la fixation du cordon en élastomère sur l'objet se fait par collage, celui-ci étant réalisé grâce au choix de l'élastomère et au traitement de la surface de l'objet.

Dans le cas d'éléments de carrosserie d'une automobile, l'extrusion du joint d'étanchéité élastique caoutchouteux directement sur l'élément de carrosserie, en particulier sur une portière, est connue par le document DE 3 833 887 A1. L'extrusion est réalisée par un manipulateur automatique commandé par programme, les conditions du procédé étant ici aussi, choisies de telle sorte qu'un collage durable soit obtenu entre le joint d'étanchéité extrudé et l'élément de carrosserie.

Lorsque le joint d'étanchéité est collé à demeure à l'élément de carrosserie, il doit être arraché lorsqu'il gène dans le cas d'une réparation devenant nécessaire. Après l'exécution de la réparation, un nouveau joint d'étanchéité doit d'abord être extrudé au cours d'une opération d'extrusion renouvelée. Dans les ateliers de réparation, dans lesquels les réparations sont effectuées, les dispositifs nécessaires à cette opération ne sont cependant, en l'extrusion ultérieure de profilés d'étanchéité ne va pas sans difficultés.

Le document US-A-2 671 935 décrit un élément d'assemblage doté d'un joint d'étanchéité, qui peut être formé par un procédé d'extrusion dans lequel une partie flexible de l'élément d'assemblage est simultanément incorporée et liée au joint d'étanchéité.

La liaison est améliorée par la présence de trous dans l'élément d'assemblage, au travers desquels la matière du joint pénètre pour une fixation solide et définitive.

L'invention a d'abord pour but de préparer un élément d'assemblage comportant un joint d'étanchéité extrudé qui. si cela est nécessaire, pourra être enlevé de façon simple de l'élément d'assemblage et être plus tard réutilisé sur ce même élément.

Par ailleurs, lorsque des joints en élastomère collés sont sollicités en arrachement dans des conditions particulièrement brutales ou lorsque, à cause de la nature du substrat par exemple, le collage peut se revéler insuffisant, on a besoin d'améliorer l'accrochage du joint sur son support.

Pour atteindre ses objets, l'invention propose un élément d'assemblage équipé d'un cordon élastomère par extrusion in situ sur un rebord de fixation de l'élément, dans lequel le rebord de fixation est pourvu d'encoches d'ancrage ou de saillies d'ancrage au contact intime desquelles a pénétré la matière de l'élastomère.

Selon l'invention, l'élastomère et le rebord de fixation ne forment pas de liaison adhésive et les encoches ou les saillies d'ancrage possèdent une contre-dépouille limitée de manière à réaliser un ancrage uniquement mécanique qui permette au cordon en élastomère d'être détaché du rebord de fixation et d'être ultérieurement fixé de nouveau.

Les caractéristiques de l'invention permettent donc de conserver le procédé économique de l'extrusion de profilés d'étanchéité et d'éviter en même temps les inconvénients qui y étaient associés jusqu'à présent, en ce sens que, d'une part, on peut les détacher. en cas de besoin, de l'élément de carrosserie et les réutiliser ultérieurement. Ceci est rendu possible par le fait que la liaison adhésive qui était réalisée jusqu'à présent lors de l'extrusion est remplacée par une liaison mécanique appropriée. Bien qu'il s'agisse, dans le cas de l'invention à l'état final, d'un profilé d'étanchéité à emboîtement, il ne présente en substance pas les inconvénients liés aux profilés à emboîtement connus. En particulier, il s'adapte de façon idéale à la forme du rebord de fixation et garantit de la sorte une étanchéité absolue à l'égard d'une infiltration d'eau entre le profilé d'étanchéité et le rebord de fixation.

Pour éviter un collage du profilé au rebord de fixation il faut que, l'élastomère utilisé pour l'extrusion et/ou la surface du rebord de fixation soient de nature à ne pas coller l'un à l'autre. Ceci peut être réalisé, par exemple, par le choix d'un élastomère approprié, qui n'adhère pas, en tant que tel, à la surface du rebord de fixation. L'adhérence peut aussi être évitée par un traitement de surface approprié du rebord de fixation, par exemple par le dépôt d'un agent de séparation approprié. Les encoches et/ou les saillies réalisant l'ancrage mécanique au niveau du rebord de fixation peuvent être formées en principe de n'importe quelle façon, tant qu'ils permettent de détacher mécaniquement le boudin profilé d'étanchéité et de le réinsérer.

Dans tous les cas, lors de l'extrusion de l'élastomère formant le profilé d'étanchéité, la filière d'extrusion et le rebord de fixation doivent être formés de telle sorte que les creux affouillés, qui sont formés par les saillies d'ancrage ou les encoches d'ancrage, soient remplis lors de l'opération d'extrusion.

L'invention sera décrite plus en détail ci-après sur la base des dessins annexés.
- la figure 1 est une vue en coupe verticale montrant la zone de transition entre une portière de véhicule et le soubassement comportant des joints d'étanchéité extrudés,
- la figure 2 montre une première forme de réalisation d'un rebord de fixation selon l'invention,
- la figure 3 montre une autre forme de réalisation d'un rebord de fixation avec possibilité de démontage du joint,

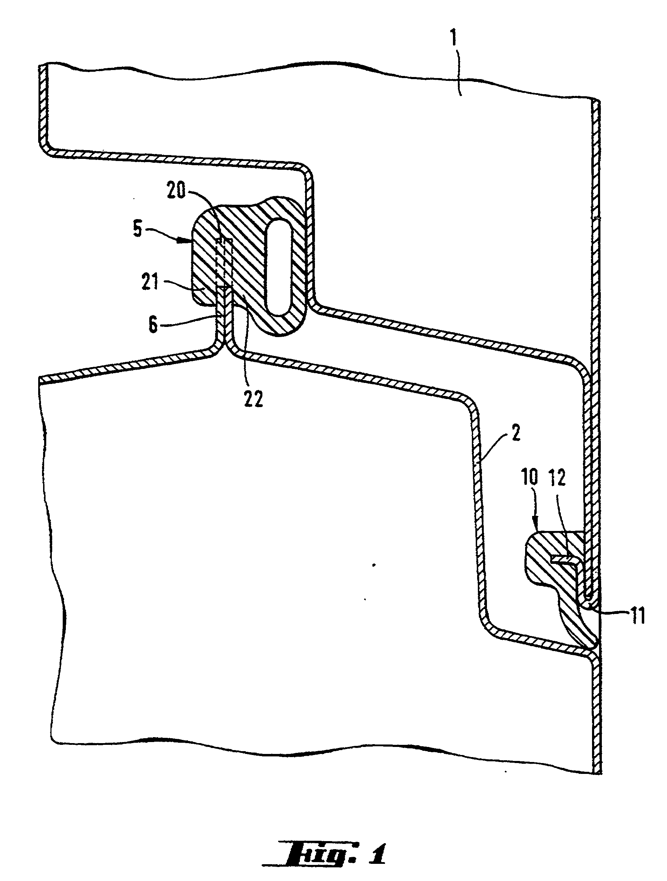

Dans le dessin de la figure 1, l'invention est représentée utilisée pour des joints d'étanchéité de portière, mais elle n'est, bien entendu, pas limitée à cette application. Elle peut être utilisée, en principe, avec le même avantage pour des couvercles de coffres, des capots et d'autres éléments de carrosserie mobiles, et également dans d'autres domaines, dans lesquels sont utilisés des profilés d'étanchéité extrudés comme dans le bâtiment ou dans les appareils ménagers.

La figure 1 montre la section inférieure d'une portière d'automobile 1 et le soubassement 2 du plancher du véhicule qui coopère avec la portière 1. L'étanchéité entre la portière et le soubassement est assurée par les deux profilés d'étanchéité 5 et 10. Le profilé d'étanchéité 5 a été produit par extrusion directe d'un élastomère sur le rebord de fixation 6 du soubassement 2, et le profilé d'étanchéité 10 par extrusion directe de l'élastomère sur le bord 11 de la portière et sur le rebord de fixation 12.

Les procédés et les dispositifs pour l'extrusion de profilés en élastomère sur des objets sont en principe connus. Un dispositif pour l'extrusion d'un profilé en élastomère sur un vitrage, tel qu'il peut être utilisé également pour le cas présent, est décrit par exemple dans le document EP O 524 092 B1. Avec les procédés et les dispositifs connus, on peut aussi extruder des boudins profilés comportant une section d'étanchéité tubulaire, tels qu'ils sont, par exemple utilisés pour le profilé d'étanchéité 5.

Des élastomères thermoplastiques ont fait leurs preuves pour la fabrication de profilés d'étanchéité extrudés, en particulier des polyoléfines-élastomères thermoplastiques constitués de polypropylène isotactique et de caoutchouc d'éthylène-propylène-diène, par exemple les produits disponibles dans le commerce sous l'appellation de SANTOPRENE. Ces élastomères thermoplastiques présentent une température de mise en oeuvre de 180 à 230°C, de sorte que l'extrudeuse ainsi que la filière d'extrusion et le flexible de raccordement entre l'extrudeuse et la filière d'extrusion doivent être chauffés de manière correspondante. Les élastomères réalisés sur cette base présentent cependant aussi la caractéristique qu'ils n'adhèrent bien au substrat, sur lequel ils sont extrudés, que lorsque la surface de ce substrat est traitée à l'aide d'un agent adhésif approprié. Cette mauvaise adhérence est avantageuse pour le procédé de l'invention. Cependant, le cas échéant, il peut être avantageux pour empêcher complètement toute adhérence, de traiter la surface du substrat à l'aide d'un agent de séparation approprié, par exemple à l'aide d'une solution contenant de la silicone.

Les saillies d'ancrage ou les encoches d'ancrage nécessaires ménagés dans les rebords de fixation peuvent être réalisés de différentes façons. Il est ainsi, par exemple possible, de ménager dans le rebord de fixation, dans le sens longitudinal, une rainure avec affouillements, une moulure ou un pli, dont la section transversale est à chaque fois formée de telle sorte que, d'une part, la fonction d'ancrage soit remplie et que, d'autre part, l'enlèvement du profilé d'étanchéité et sa réinsertion soient possibles.

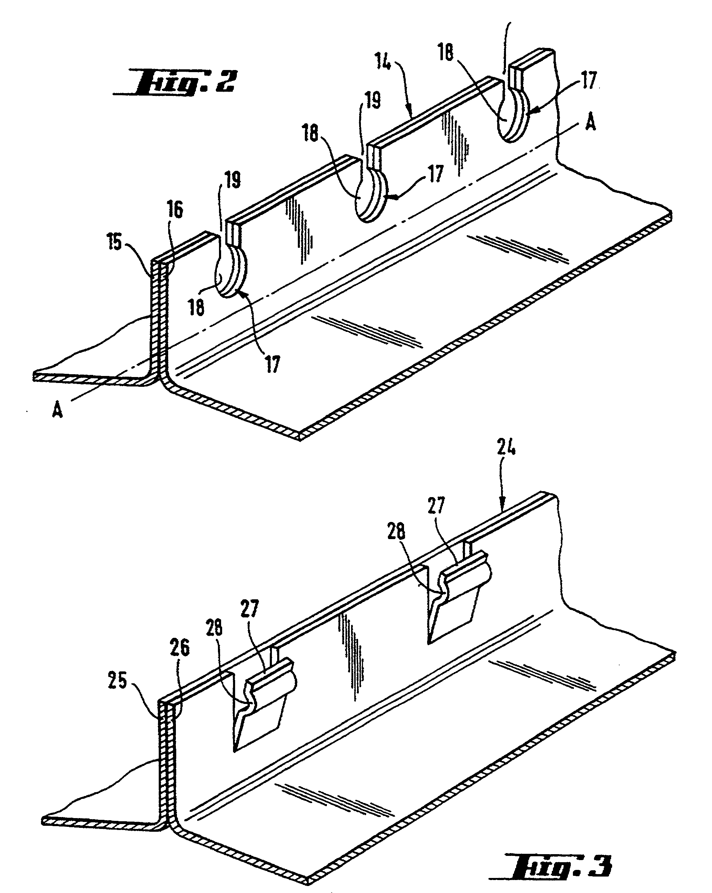

Des formes de réalisation appropriées pour la configuration du rebord de fixation sont représentées sur les figures 2 et 3. Les figures montrent les rebords de fixation 14 et 24, qui correspondent au rebord de fixation 6, sur la figure 1. Le rebord de fixation 14, qui est formé par les deux bandes de tôle 15, 16 pliées et soudées l'une à l'autre, est pourvu au niveau de son bord supérieur d'encoches 17, qui sont, par exemple, produites par estampage. Les encoches 17 sont constituées dans le cas représenté d'une ouverture 18, par exemple ronde et d'une coupure 19 reliant l'ouverture 18 au côté supérieur du rebord de fixation. Lors de l'extrusion du profilé d'étanchéité, le rebord de fixation est recouvert par l'élastomère au-delà des ouvertures 18, à peu près jusqu'à la ligne A-A. L'élastomère hautement visqueux pénètre de ce fait dans les ouvertures 18 et dans les coupures 19. Dès que la matière extrudée est durcie, le cordon profilé ainsi formé peut être retiré du rebord de fixation et être ultérieurement refixé sur le rebord de fixation, les barrettes de liaison 20 formées lors de l'extrusion à l'intérieur des ouvertures 18 et des coupures 19 sont alors réintroduites dans les encoches 17 correspondantes entre les deux ailes 21 et 22 du profilé d'étanchéité 5 (figure 1).

Dans le cas de la forme de réalisation représentée sur la figure 3, le rebord de fixation 24 est à nouveau formé de deux bandes de tôle 25 et 26 pliées. Dans ce cas, les encoches nécessaires pour l'ancrage mécanique sont formées par le fait que, dans les bandes de tôle 26, à des distances de par exemple 5 à 20 cm, de petits segments de tôle 27 au niveau du bord sont coudés et pliés vers l'extérieur en forme de becs à l'aide d'un outil d'estampage approprié. Ces segments de tôle 27 sont pourvus, dans la même opération d'estampage, d'une moulure 28, qui forme à chaque fois des saillies d'ancrage pour la matière élastomère tant du côté intérieur, c'est-à-dire à l'intérieur du logement formé par le segment de tôle 27 plié et la bande de tôle 25, que du côté extérieur des segments de tôle 27.

Ainsi, l'invention permet le démontage puis le remontage d'un cordon en élastomère, et contribue à la maîtrise de la liaison d'un joint extrudé in situ avec son support.

Les domaines d'application de l'invention sont les mêmes que ceux de la technique exposée dans le document EP-A-0 524 092.

## Revendications

1. Elément d'assemblage équipé d'un cordon élastomère par extrusion in situ, sur un rebord de fixation de l'élément, **caractérisé en ce que** le rebord de fixation (6, 12, 14, 24) est pourvu d'encoches d'ancrage (17) ou de saillies d'ancrage (27, 28) au contact intime desquelles a pénétré la matière de l'élastomère, **en ce que** l'élastomère et le rebord de fixation (6, 12, 14, 24) ne forment pas de liaison adhésive **et en ce que** les encoches (17) ou les saillies d'ancrage (27, 28) possèdent une contre-dépouille limitée de manière à réaliser un ancrage uniquement mécanique qui permette au cordon en élastomère (5, 10) d'être détaché du rebord de fixation (6, 12, 14, 24) et d'être ultérieurement fixé de nouveau.

2. Elément d'assemblage selon la revendication 1, **caractérisé en ce que** les encoches d'ancrage (17) d'un rebord de fixation (14) sont constituées de coupures marginales (19) s'ouvrant dans des ouvertures (18) à peu près circulaires, dans lesquelles les barrettes de liaison (20), formées, lors de l'extrusion, entre les ailes (21, 22) du segment du profilé d'étanchéité (5) recouvrant le rebord de fixation (6), peuvent être ultérieurement réintroduites.

3. Elément d'assemblage selon la revendication 1, **caractérisé en ce que** les saillies d'ancrage sont constituées de segments de tôle (27) coudés, pourvus de moulures (28).

4. Elément d'assemblage selon l'une des revendications 1 à 3, **caractérisé en ce que** le moyen qui permet que l'élastomère et le rebord de fixation (6, 12, 14, 24) ne forment pas une liaison adhésive est un traitement de surface du rebord de fixation, notamment le dépôt d'un agent de séparation.

5. Elément d'assemblage selon l'une des revendications 1 à 3, **caractérisé en ce que** le moyen qui permet que l'élastomère et le rebord de fixation (6, 12, 14, 24) ne forment pas une liaison adhésive est le choix d'un polymère qui n'adhère pas, en tant que tel à la surface du rebord de fixation.

6. Elément d'assemblage selon la revendication 5 **caractérisé en ce que** ledit élastomère est un polyoléfine élastomère thermoplastique constitué de polypropylène isotactique et de caoutchouc d'ethylène-propylène-diène.

## Patentansprüche

1. Verbindungselement mit einem durch Extrusion in situ an einen Befestigungsflansch des Elements angebrachten Elastomerstrang, **dadurch gekennzeichnet, dass** der Befestigungsflansch (6, 12, 14, 24) mit Verankerungsausnehmungen (17) und/oder Verankerungsvorsprüngen (27, 28) versehen ist, dass das Elastomer und die Oberfläche des Befestigungsflansches (6, 12, 14, 24) keine adhäsive Bindung miteinander eingehen, und dass die Verankerungsausnehmungen (17) und/oder die Verankerungsvorsprünge (27, 28) eine begrenzte Hinterschneidung haben, so dass eine lediglich mechanische Verankerung gebildet wird, welche es erlaubt, das Dichtungsprofil (5, 10) vom Befestigungsflansch (6, 12, 14, 24) zu lösen und es später wieder daran zu befestigen.

2. Verbindungselement nach Anspruch 1, **dadurch gekennzeichnet, dass** die Verankerungsausnehmungen (17) eines Befestigungsflansches (14) aus Randeinschnitten (19) und sich daran anschließenden etwa kreisförmigen Löchern (18) bestehen, in die die beim Anextrudieren entstandenen Verbindungsstege (20) zwischen den Schenkeln (21, 22) des den Befestigungsflansch (6) übergreifenden Abschnitts des Dichtprofils (5) später wieder einknüpfbar sind.

3. Verbindungselement nach Anspruch 1, **dadurch gekennzeichnet, dass** die Verankerungsvorsprünge aus abgekröpften, mit Sicken (28) versehenen Blechabschnitten (27) bestehen.

4. Verbindungselement nach einem der vorstehenden Ansprüche 1 bis 3, **dadurch gekennzeichnet, dass** das Mittel zum Verhindern einer adhäsiven Verbindung zwischen dem Elastomer und dem Befestigungsflansch (6, 12, 14, 24) eine Behandlung der Oberfläche des Befestigungsflanschs, insbesondere eine Beschichtung mit einem Trennmittel ist.

5. Verbindungselement nach einem der vorstehenden Ansprüche 1 bis 3, **dadurch gekennzeichnet, dass** das Mittel zum Verhindern einer adhäsiven Verbindung zwischen dem Elastomer und dem Befestigungsflansch (6, 12, 14, 24) die Auswahl eines nicht an der Oberfläche des Befestigungsflanschs haftenden Polymers ist.

6. Verbindungselement nach Anspruch 5, **dadurch gekennzeichnet, dass** das besagte Elastomer ein thermoplastisches Polyolefin-Elastomer aus isotaktischem Polypropylen und Ethylen-Propylen-Dien-Kautschuk ist.

## Claims

1. Assembly element equipped with an elastomer bead by in situ extrusion on a fixing flange of the element, **characterized in that** the fixing flange (6, 12, 14, 24) is provided with anchoring notches (17) or anchoring projections (27, 28) in intimate contact with which the elastomer material has penetrated, **in that** the elastomer and the fixing flange (6, 12, 14, 24) do not form an adhesive connection and **in that** the anchoring notches (17) or projections (27, 28) have an undercut limited so as to bring about a solely mechanical anchoring enabling the elastomer bead (5, 10) to be detached from the fixing flange (6, 12, 14, 24) and to be subsequently fixed again.

2. Assembly element according to claim 1, **characterized in that** the anchoring notches (17) of a fixing flange (14) are constituted by marginal cuts (19) opening into roughly circular openings (18), in which connection strips (20) formed during extrusion between the wings (21, 22) of the segment of the sealing profile (24) covering the fixing flange (6) can subsequently be reintroduced.

3. Assembly element according to claim 1, **characterized in that** the anchoring projections are constituted by bent sheet metal segments (27) provided with mouldings (28).

4. Assembly element according to one of the claims 1 to 3, **characterized in that** the means ensuring that the elastomer and the fixing flange (6, 12, 14, 24) do not form an adhesive connection is a surface treatment of the fixing flange, more particularly the deposition of a separating agent.

5. Assembly element according to one of the claims 1 to 3, **characterized in that** the means ensuring that the elastomer and the fixing flange (6, 12, 14, 24) do not form an adhesive connection is the choice of a polymer which does not'adhere to the surface of the fixing flange.

6. Assembly element according to claim 5, **characterized in that** said elastomer is a thermoplastic, elastomeric polyolefin constituted by isotactic polypropylene and ethylene-propylene diene rubber.
